# DEMANDE DE BREVET EUROPEEN

(11) **EP 0 600 808 A1**
(43) Date de publication de la demande: **08.06.1994**
(21) Numéro de dépôt: 93420472.8
(22) Date de dépôt: 26.11.1993
(51) Int. Cl.: B09B 3/00, B65F 1/00, B65F 1/14, B65F 1/12, B02C 18/40, B30B 9/30

(54) **Dispositif pour le tri, le broyage et le conditionnement de déchets**

(30) Priorité: 30.11.1992 FR 9214602
(71) Demandeur: Sarl ROUGEMONT-BARBIER, F-69400 Villefranche-Sur-Saone (FR)
(72) Inventeur: Rougemont, Jean, F-69450 Saint-Cyr-au-Mont-d'Or (FR)

(57) **Abrégé**

Sélecteur-compacteur de déchets comportant des ouvertures pour plusieurs sortes de déchets: verres (72), tôles der fer ou autres (71), papiers-cartons (103), matières plastiques (105), des moyens de broyage (77,79,96,98), des réserves de stockage séparées par des cloisons (81) et des moyens de conditionnement.

## Description

La présente Invention concerne un **Sélecteur-Compacteur-Automatique de** **Déchets** des principales matières telles que verres, tôles, papiers-cartons, matière plastique ... , nécessitant un traitement de réduction de volume avant le stockage et d'autres déchets qui s'entassent facilement sous un faible volume sans être broyés. Il permet également le conditionnement en sacs soudés étanches répertoriés aux couleurs normalisées, selon la matière des déchets contenues, et de manipulation aisée par tous usagers.

Le Sélecteur-Compacteur selon l'invention comporte un bloc armoire, au moins deux unités principales différentes, fonctionnant en parallèle, constituées chacune d'une unité d'entrée, d'une unité de broyage, d'une unité de stockage, une ouverture d'accès direct, une unité de conditionnement, des moyens de commande et des moyens de contrôle de l'état de fonctionnement de l'appareil.

Chaque unité principale est spécifique d'une matière de déchet à traiter et le Sélecteur-Compacteur en comporte autant qu'il y a de matières différentes à traiter. De préférence, il en possède quatre respectivement pour le verre, la tôle, le papier-carton et les matières plastiques.

Chaque unité d'entrée admet les déchets d'une matière prédéterminée et les transmet à l'unité de broyage qui réduit le volume des déchets reçus et les déverse dans l'unité de stockage intermédiaire, jusqu'à ce que l'unité de conditionnement soit prête à les recevoir.

La présente invention concerne également des orifices d'entrée sélective pour permettre l'entrée de certaines matières de déchets et empêcher l'entrée d'autres matières. Cette sélection est obtenue par la forme géométrique des orifices d'entrée et/ou par la présence de capteurs placés sur ces entrées.

La présente invention concerne aussi des unités de broyage comportant des goulottes guidant les matières à broyer et des rotors de déchiquetage collaborant avec des grilles.

La présente invention est relative à des unités de conditionnement de déchets comportant une trémie de guidage au système de mise en place et/ou de formation de sac et un système pour souder les sacs et pour les séparer les uns des autres.

La présente invention protège également les moyens de contrôle et de commande d'un sélecteur compacteur de déchets.

La présente invention est aussi relative à un sélecteur compacteur destiné à compacter une seule matière de déchet comportant une unité d'entrée sélective, une unité de broyage performant pour un seul type de déchet, éventuellement une unité de stockage intermédiaire et une unité de conditionnement dans des sacs.

Le bloc-armoire, de forme parallélépipédique rectangle de préférence, renferme et supporte des éléments fonctionnels du Sélecteur-Compacteur. De façon préférentielle, il est destiné à s'imbriquer à l'intérieur d'un bloc-cuisine dont la face avant est d'accès très facile. Celle-ci supporte donc les accès d'entrée, de sortie, de contrôle, les membres commande et les voyants de contrôle.

En fonctionnement normal, les déchets compacts qui n'ont pas besoin d'être broyés, telles que épeluchures de légumes et de fruits, résidus de cuisine, sont directement jetés dans le sac d'emballage au travers de l'ouverture d'accès direct. Lorsque le sac est plein, un dispositif de soudage ferme le sac, un système le détache des autres sacs et place un nouveau sac en position de remplissage.

Dans cet état où le sac est vide, il est possible de manoeuvre des moyens de vidage d'une unité de stockage intermédiaire choisie qui laisse se déverser son contenu de déchets traités dans le sac. Lorsque le sac est déclaré plein, en raison de son poids ou de son volume par les moyens de contrôle, le dispositif de soudage ferme le sac et un nouveau sac est mis en place pour être rempli soit par les déchets traités d'une unité de stockage ou par des déchets venant directement de l'ouverture à accès direct.

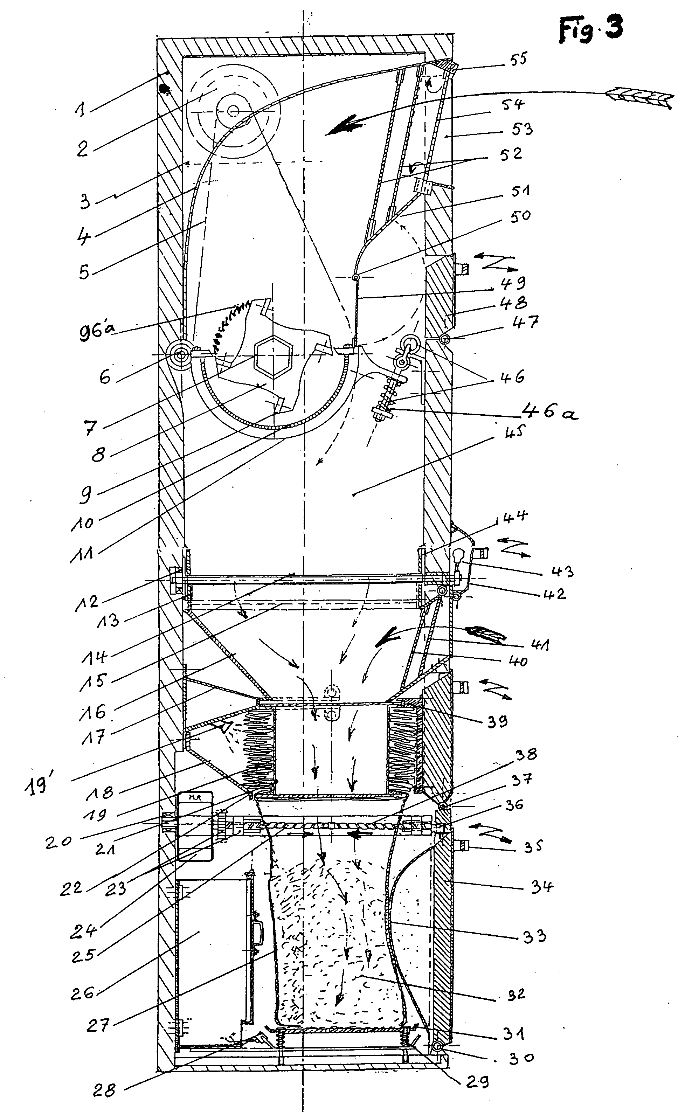

La figure 2 représente une coupe du Sélecteur-Compacteur montrant une unité principale de broyage du papier-carton ou du plastique, l'entrée d'accès direct, un sac en phase de remplissage. La figure 3 montre le Sélecteur-Compacteur en coupe au niveau d'une unité de traitement du verre ou de la tôle, les soudeuses fermant un sac plein.

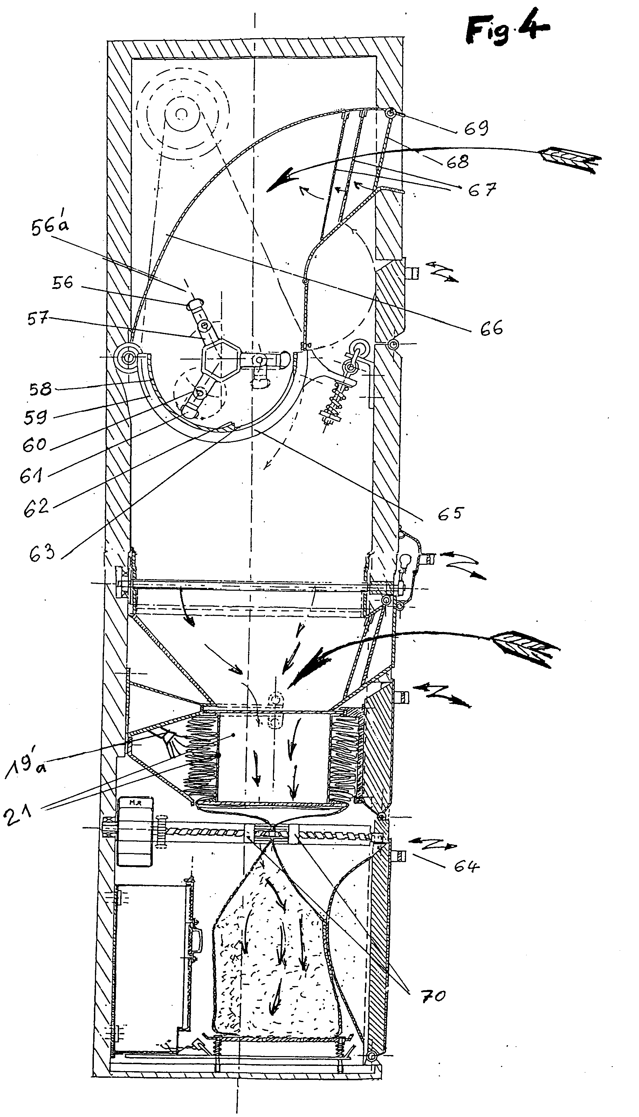

La figure 4 représente le Sélecteur-Compacteur en coupe perpendiculaire par rapport aux figures 2 et 3 montrant quatre unités principales, les moyens d'ouverture des unités de stockage et un sac en cours de remplissage.

La figure 6a et 6b montrent en coupe perpendiculaire à leur axe, respectivement l'unité de broyage du papier-carton et/ou du plastique, et l'unité de broyage du verre et/ou de la tôle.

Les figures 6c, 6d, 6e représentent respectivement un rotor pour la tôle et/ou le verre et un rotor pour le traitement du papier-carton et/ou plastique.

La figure 7 montre les quatre unités de compactage pour compression, variante des rotors cylindriques 6, 6a, 6b, 6c, 6d, 6e des volets pousseurs, mus par vérins, se déplaçant en translation compriment des tôles, concassent les verres, compriment papiers-cartons et plastiques. Des ouvertures calibrées, situées à la base, permettent leurs évacuations vers les trémies de stockage momentanément. La figure 8 représente en perspective les systèmes de compression de la figure 7 avec ses actionneurs (vérins) et les trémies d'alimentation alimentées par les goulottes d'entrées.

La figure 9a montre un système d'avance des mâchoires soudeuses de sac variante du système figure 3 avance par moteur électrique 24 et vis sans fin pas à droite pas à gauche 25 - 38.

La figure 9b montre un exemple de denture de découpe des systèmes à compression de la figure 7.

La figure 10 schématise les quatre unités de traitement des déchets de différentes matières..

Les figures 11, 12, 12a, 13, 13a, 14, représentent l'unité de conditionnement avec sac, moyen de formation du sac et moyen de sa fermeture.

La figure 15 montre de côté un Sélecteur-Compacteur pour une seule sorte de matière de déchet.

Le bloc-armoire 1, supportant et renfermant les éléments fonctionnels du Sélecteur Compacteur, est insonorisé et de dimension normalisée pour s'adapter aux dimensions des éléments des meubles de cuisine. Pour cette raison, la face avant porte les moyens de commande, de contrôle, d'accès au Sélecteur-Compacteur, tels que des moyens de commande et consignes manuelles 43, 118, 119, 120, 124, 125, 127 pour programmation, des moyens de visualisation 107, 108, 109, 110, 126 d'exploitation et de fonctionnement, des moyens 122, 131, 132 pour intervention, entretien et contrôle avec des capteurs sur les ouvertures et systèmes de sécurité adaptés, des moyens 130 pour mise en place d'une cassette interchangeable pour sacs, support de gaine d'emballage, stockage plissé en accordéon pour conception des sacs de remplissage et récupération, témoin lumineux 130a indicateur de cassette vide, moyens 131 pour extraire les sacs soudés hermétiquement après calibrage et tarage avec accès aux coffrets électriques 26 en arrière plan, comme cela sera précisé plus loin.

Chaque unité d'entrée admet les déchets d'une matière déterminée et refuse les autres. Ceci est permis par un orifice d'entrée indépendant adapté à chacun des produits dans la face avant. La sélectivité des produits entre eux est assurée par des orifices différents 112 pour le verre, 111 pour la tôle, 115, 116 pour le papier carton, 114, 117 pour les plastiques. Cette sélection des matières impose des ouvertures d'accès sur la face avant du Sélecteur-Compacteur adaptées à chaque produit de matière différente.

L'ouverture calibrée 71 d'accès aux boîtes tôles comprend deux joues parallèles (adaptées aux plus grandes dimensions des boîtes) lesquelles sont placées à la base et au sommet de deux demi-cercles, le tout formant une ovoïde régulière. L'ouverture calibrée 72 d'accès aux récipients verre comporte deux joues parallèles, avec demi-cercle à la base et au sommet.

L'ouverture calibrée 103 pour papiers-cartons, parallélépipédique, avec angles arrondis et grand axe vertical pour boîtes cartons, journaux ou revues, possède à l'entrée un rétrécissement 104 en son centre par deux parties de cercles en opposition placées verticalement, chacune issue d'un angle du sommet. Ex gauche pour 104, sommet de la partie de cercle à mi-hauteur de l'orifice d'entrée (rétreint maxi) pour se terminer à l'angle de base gauche du parallélépipède. Ainsi conçu, cet orifice interdit l'introduction des plus petites bouteilles de verre (grande consommation de boissons).

L'ouverture calibrée 105 pour les emballages plastiques est parallélépipédique, avec angles arrondis, grand axe vertical sa base incurvée en V facilite l'accès et le guidage par centrage de certaines bouteilles plastiques volumineuses. Cette ouverture 105 est plus large et plus haute que celle 104 prévue pour papiers-cartons.

Ces quatre ouvertures : verres 72, tôles 71, papiers-cartons 103, emballages plastiques 105, donnent accès par des goulottes cloisonnées respectives 74, 75, 76, 102 conduisant chacun des matériaux dans les unités de broyage respectives. Ces ouvertures, placées au sommet du bloc pour des raisons de sécurité, sont accessibles à bout de bras par une personne de petite taille. Chaque entrée possède une sécurité par verrouillage électromagnétique, commande électronique, ou tout autre moyen approprié. Au repos, les quatre portes d'accès sont fermées, le moteur frein 2 d'entraînement des rotors reste à l'arrêt. Lors de la pénétration d'un objet, le moteur frein 2 démarre. Si une porte d'accès n'est pas refermée au bout de trois secondes, le moteur frein 2 s'arrête provoquant l'immobilisation instantanée de toutes parties dynamiques tournantes.

Des capteurs électromagnétiques, optiques et dimensionnels, interdisent l'entrée de matériaux autres que ceux destinés à cette entrée, exemple des électro-aimants sur les ouvertures 72, 104, 105, interdisent l'entrée des boîtes tôles. L'ouverture 72 pour verres, avec son volet articulé au sommet, possède une forme sélective 112. L'ouverture 71 pour tôles, avec son volet articulé au sommet, possède la forme sélective 111. L'ouverture 103 pour cartons-papiers, avec ses deux volets articulés sur les montants latéraux et ressorts de rappel, possède la forme sélective 116. L'ouverture 105 pour matières plastiques, avec ses deux volets articulés sur les montants latéraux et ressorts de rappel , possède la forme sélective 117.

Derrière chacune de ces quatre entrées calibrées d'accès aux différentes matières, au moins un volet souple 52, 53, 54, 67, 68 en matériaux isolants, antibruits et anticorrosifs, se relève aux passages des déchets pénétrant par les orifices puis revient épouser le pourtour intérieur de chaque goulotte trémie 4, 66, conçue pour assurer un maximum d'étanchéïté. Ils peuvent être au nombre de 2, 3 par entrée, voire même montés sous formes de chicanes. Chaque ouverture calibrée débouche sur une trémie goulotte. Les trémies goulottes 4, 66 solidaires du bloc armoire 1, liées à des supports 55 du volet d'accès 68 et à son axe 69 à proximité des ouvertures d'entrées, supportent en parties hautes des volets souples 52, 67 et viennent reposer, par leur base inférieure arrière, sur la partie fixe d'un boîtier cylindrique supportant l'axe 6, encastrée et liée sur la partie arrière du bloc 1.

La partie avant inférieure vient en appui sur un support 11 de grille métallique. Un volet de visite 49 articulé autour d'un axe support 50 pour son re- levage possède à sa base une vis à tête moletée le liant solidaire à support 11 de grille.

Ces quatre trémies goulottes possèdent deux joues latérales parallèles, placées 2 à 2 en mitoyenneté, séparées entre elles par les courroies 76 d'entraînement des rotors. La surface délimitée par la trémie goulotte 4 pour papier-carton ou plastique est supérieure à celle délimitée par la trémie goulotte 66 pour verre ou tôle. Cette surface délimitée par les goulottes 4 et 66, en forme de corne ou coude en équerre non régulier, non symétrique, s'évasent immédiatement après les orifices d'entrée pour apporter aisance aux produits à acheminer verticalement sur les rotors de broyage, constitués de couteaux ou scies fraises, ainsi que sur masselottes des rotors correspondant aux produits triés et sélectionnés. Les matériaux constituant ces trémies goulottes sont de préférence en acier, duralumin, des moulés stratifiés, des thermo-plastiques moulés ou injectés. Une imprégnation intérieure en surface sur les parois par flaconnage d'un produit anti-bruit, anti-vibrateur, diminue des émissions de décibels.

Les quatre trémies goulottes canalisent verticalement à l'état brut les déchets triés, sélectionnés depuis les quatre orifices d'entrée, vers les unités de broyage :
... dont les rotors 77 à masselottes concassent le verre avec arête émoussée sous forme de grains, paillettes ou flocons, réduisant tous risques de coupures,
... dont les rotors 79 à masselottes martèlent et compriment par cisaillement les boîtes cylindriques ou autres de tôle sous forme de feuille plate incurvée,
... dont les rotors 96 à couteaux broient, découpent, réduisent sous forme de granules, de lamelles ou de mini bandelettes, les papiers-cartons, journaux,
... dont les rotors 98 à couteaux broient et réduisent sous forme granulaire les matériaux plastiques.

Ces rotors 77, 79, 96, 98 sont liés et axés sur un arbre hexagonal 7 permettant un décalage angulaire des rotors supports de masselottes marteaux d'un même sous ensemble ou bien des rotors supports de couteaux d'un autre sous ensemble.

Selon une variante, l'arbre 7 support des rotors est cylindrique et possède des cannelures en surface adaptées pour procurer les décalages angulaires désirés des rotors les uns par rapport aux autres.

Les rotors 57 pour verre ou tôle supportent des têtes de masselottes d'aciers spéciaux gainés, 77 pour les verres, 79 pour les tôles (fer) ou autres matériaux durs, peuvent être multiples pour chacun de ces deux matériaux.

Ils s'associent parallèlement alignés ou à décalage angulaire approprié. Chaque rotor est percé en son centre d'un orifice alésé hexagonalement ou cylindrique pour ajustement sur l'axe ou arbre de transmission correspondant 7. Il peut être à 2, 3, 4 bras avec étrier en tête ou même conçu par deux joues cylindriques parallèles séparées par une entretoise, le tout formant en tête un étrier avec trou d'axe 60 support des masselottes 61. Les têtes origines des masselottes 61 percées à leur base sur une partie plane d'épaisseur appropriée, pour venir s'ajuster avec jeu nécessaire permettent une rotation de plus ou moins 120° autour de l'axe 60 supporté par les étriers des rotors 57. Les rotors sont de préférence alésés cylindriques, l'alésage interne possédant des cannelures appropriées décalées pour clavetage selon les angles recherchés. Des butées, éventuellement, limitent les courses angulaires en rotation des têtes de masselottes.

Les têtes de masselottes interchangeables (ou marteau) possèdent une embase de section rectangulaire ou cylindrique, évidées en leur centre par un trou cylindrique formant une pièce femelle dans laquelle vient s'ajuster ou se visser la tête cylindrique formant une pièce mâle de l'extrêmité de 61 tête des masselottes. La masselotte 56 est liée à la tête 61 par vis ou rivet. L'axe 60 a une section suffisante pour résister aux contraintes des efforts et usure. Des coussinets, des bagues bronze, des roulements à billes améliorent toutes ces liaisons mobiles autour de ces axes de rotation. Les têtes de masselottes, dans le cas d'un montage parallèle en ligne, doivent toutes se tangenter avec un léger jeu, évitant toutefois un frottement quelconque au contact de deux rotors en parallèle.

Les rotors ou volants à inertie 8 et supports des couteaux mobiles 9, pour découpage, broyage des matières plastiques 98, 99 et pour hachage, découpage des papiers-cartons 96, 97, s'associent parallèlement en nombres désirés et nécessaires, alignés ou à décalage angulaire approprié, que rend possible l'alésage de leur partie centrale axée, hexagonale. L'arbre cylindrique avec décalage angulaire des clavettes et cannelures possède la même propriété. L'ébauche de leur découpe extérieure haute est à section approximativement carrée. De préférence, sur chacun des quatre côtés, une découpe interne en arc de cercle est suivie d'une partie plane (ou deux parties planes forment un angle obtus). Chaque partie plane d'un côté, conjuguée avec l'autre partie en arc de cercle du côté qui lui succède, forment ainsi un becquet sur chaque angle. Chaque tête de becquet est usinée avec un angle d'incidence, définissant l'angle de coupe que prolonge le couteau interchangeable 9. Les quatre becquets d'angles supports des quatre couteaux sont identiques et symétriques. Leur nombre peut être supérieur à quatre. De préférence, l'intérieur de chaque rotor est usiné et évidé afin d'en assurer des équilibrages statiques et dynamiques. Les couteaux en acier spéciaux, interchangeables, mobiles 9 sont fixés par des moyens appropriés sur les parties planes des becquets du rotor. Ils peuvent se retourner afin d'utiliser l'autre tête de lame opposée ; vue de profil ce sont des parallélogrammes, dont l'angle de coupe ou tranche est à adapter en fonction des matériaux à broyer. Vue de dessus, leur section est rectangulaire, leurs largeurs épousent celles du rotor correspondant.

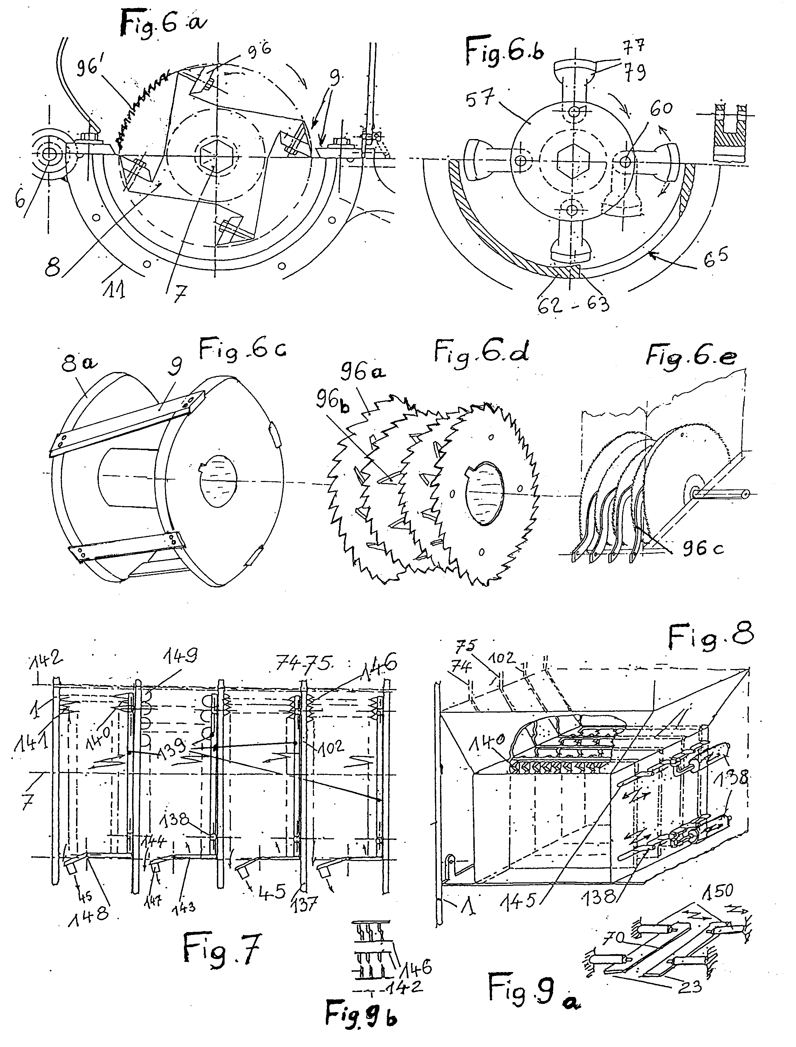

Selon une première variante, le rotor 8 est constitué par un seul rotor 8a figure 6c en forme de H, constitué d'un moyeu ou manchon cylindrique ajusté sur l'arbre supportant deux flasques ou disques cylindriques latéraux de diamètre correspondant à la révolution des couteaux mobiles 9. Les couteaux 9 figure 6c reposent transversalement en décrivant un angle d'incidence sur la périphérie des deux flasques cylindriques leur nombre peut être multiple, même principe de fixation des lames que précédemment, visserie appropriée.

Selon une seconde variante, le rotor 8, 8a et 57 est constitué par un ensemble de scies fraises circulaires 96a à dentures de pas variable adapté au matériau, figure 6d et placées en parallèle. Un manchon entretoise assure l'intervalle séparant deux lames consécutives en parallèle. Ce manchon axé sur l'arbre peut supporter au moins un volet transversal 96b faisant office de ventilateur. Les fraises peuvent avoir des diamètres différents, leur groupement en parallèle n'est pas limitatif. Des doigts intercalaires fixes 96c s'imbriquent entre deux fraises circulaires, ils peuvent se substituer aux grilles fixes 10, figure 6e.

Les grilles placées sur/sous les rotors collaborent avec les rotors pour déchiqueter et broyer les déchets puis les laissent s'échapper lorsqu'ils sont suffisamment broyés et réduits en volume.

Les couteaux d'aciers spéciaux interchangeables 9, fixés sur 11, supports de grilles métalliques, sont identiques aux couteaux mobiles précédents mais ils peuvent avoir d'autres formes ou dimensions si besoin est. Leur fixation, par vis ou autre, peut posséder des repères de guidage à coulisseaux pour ajustement en dimensions d'entrefer en rotation avec les couteaux mobiles, définissant ainsi l'épaisseur des découpes granulométriques des produits à broyer. Tous ces rotors sont entraînés par des moteurs électriques de type asynchrone ou moteur à courant continu à vitesse variable. Les moteurs asynchrones voient leur vitesse démultipliée par jeux de poulies et de courroies crantées ou trapézoïdales.

Les supports 11 de grilles et de couteaux de profil demi-cylindrique sont constitués par des demi-brides de types grosses conduites, associées en parallèle et assemblées entre elles par des entretoises transversales soudées ou boulonnées sur des joues ou flasques. Elles doivent être en matériaux moulés d'une seule ou plusieurs pièces en parallèle (fonte, duralumin, alpax, par exemple). Ces supports 11 de grilles possèdent des moyens d'adaptation et de fixation en leurs extrêmités et des moyens internes de cloisonnement assurant séparation entre chaque produit broyé ou compacté. En partie arrière ou dos du bloc 1, ils sont montés articulés sur un axe 6, liés solidairement en rotation sur le bloc 1. La pièce cylindrique, évidée en son centre pour passage de l'axe 6, fait partie intégrante du support 11 et est liée. L'axe 6 d'encrage est supporté en extrémité par deux étriers coussinets solidaires des faces latérales parallèles du bloc 1. Un étrier central support d'axe peut assurer un relais pour éviter la contrainte de déformation de l'axe.

Sur la partie interne de la face avant du bloc 1 une semelle plaquée et fixée latéralement, de profil triangulaire, dont un angle se prolonge par une partie plane percée pour recevoir une tige 46 constituant l'axe de support d'un ressort amortisseur 46a de la grille 10 et de son support 11. Une entretoise longitudinale en forme de demi-cercle, dont le diamètre doit correspondre à celui intérieur de la cuve support 11, 59 de grille est placée de chaque côté des sous ensembles blocs de rotor 98, 96, 77, 79. Un passage d'un axe 7 est aménagé intérieurement. Ces entretoises et les supports de grilles permettent de former le cloisonnement des quatre bacs individuels de stockage dont les fonds sont les grilles 10, 58 aménagées en fonction de chaque matière.

Les grilles 58, demi-circulaires de métal déployé roulé, fixées dans une cuve 59, sont perforées pour apporter une granulométrie émoussant les arêtes du verre.

En phase de travail avec les masselottes 56, les grilles 63 avec becquets de butée 62, adaptées pour compacter les emballages tôles, épousent la forme des supports de grilles 65 et leur sont liées. Les ouvertures des grilles 63 et les butées 62 seront complémentaires et adaptées pour permettre aux masselottes 56 des rotors d'aplatir et d'évacuer ces emballages tôles à l'intérieur des réserves de stockages 45.

Les ensembles grilles 10, supports de grilles 11, couteaux 9 fixés sur les supports 11, articulés autour d'un point fixe de l'axe 6, sont montés oscillants par le cylindre bloc ressort monté en translation et guidé sur sa tige 46 d'axe muni d'un étrier articulé en tête. Cet étrier peut se verrouiller par action sur un anneau de tête, qui lui-même est supporté par le fer cornière à angle obtus fixé à sa base à même le bloc 1, face avant, approximativement aux deux tiers de hauteur de ce bloc 1. L'écrou, placé en bout de la tige filetée 46 support de ressorts hélicoïdaux, permet de faire le réglage d'approche des couteaux 9, ou des masselottes 56 à tête mobile, par rapport aux grilles 10 et aux butées de blocage 62 pour tôles d'emballage ainsi qu'au passage calibré 63. Le déverrouillage complet du ressort sur la tige 46 permet l'abaissement des grilles 10, 62, 63 et de leurs supports mobiles autour de l'axe 6 afin d'assurer l'entretien et le nettoyage par un volet 49 et une porte 48 situés sur la face avant du bloc 1. L'ensemble tige filetée 46 et support de ressorts hélicoïdaux calibrés, ressorts et écrous de réglage peuvent être jumelés. L'ensemble des grilles 10 à perforations adaptées et de leurs supports 11 forment donc des cuvettes demi-sphériques montées sur un système oscillant autour de l'axe 6 à l'arrière et en suspension calibrée et ajustable à l'avant par l'ensemble 46.

En-dessous de cet ensemble, les unités de stockage comportent des réserves de stockage séparées les unes des autres par des cloisons 81, des moyens de contrôle de leur niveau de remplissage et des moyens de déversement 83, 84, 85, 86, 95 de leur contenu dans l'unité de conditionnement. Les réserves de stockage 45 reçoivent les déchets broyés, compilés ou granulés, réduits en volume. Des capteurs électroniques ou autres définissent les niveaux de remplissage des réserves de stockages. Elles sont séparées entre elle par des cloisons 81 appropriées souples à soufflet au sommet afin d'obtenir le basculement vers le bas des grilles 10 et supports de grille 11, formant une cuve demi-sphérique suspendue, oscillante sur la tige 46.

Les cloisons 81 sont fixées sur les supports de grille 11, puis prolongées vers le bas par des cloisons de séparation 82 faites de préférence d'un matériau plus rigide. Ces trois cloisons, parallèles aux deux flancs latéraux du bloc 1, se répartissent l'intervalle compris entre les deux flancs latéraux du bloc 1.

Dans l'autre sens du bloc 1, elles rejoignent les deux faces avant et arrière sur lesquelles elles seront fixées par des moyens assurant l'étanchéïté entre elles et le bloc 1. A leurs bases, ces trémies réserves de stockages 45 disposent de moyens de vidanges par des systèmes de volets 84 montés fixes sur des axes supports 85. Les axes supportant les volets sont posés mobiles de préférence sur des roulements montés à l'arrière et à l'avant du bloc 1. A l'avant, cet axe 85 traverse la cloison extérieure du bloc 1, débouche en saillie afin de permettre la mise en place sur cette partie aménagée à cet effet, de poignées de vidanges manuelles 95, démontables, solidaires de l'axe 85, par des moyens adaptés. Le maintien en position fermée des volets 84 s'effectue par des ressorts de rappels 86, actionneurs des volets 84 sur l'axe 85. Des butées 83, conçues en matériaux souples, assurant l'étanchéïté sont placées sur les arêtes longitudinales des volets. Les axes 85 ne sont pas obligatoirement montés au centre du grand axe longitudinal du volet ; c'est le cas du volet de la trémie de stockage pour tôles nécessitant une grande sortie d'évacuation. Les poignées de vidanges ont leur tige d'axe droite de préférence. Leurs têtes 95 peuvent revêtir des formes différentes et répondre aux couleurs normalisées des matériaux sélectionnés. La position des volets au repos décrit par rapport à l'horizontale un angle pouvant être variable suivant les matériaux stockés.

Ces quatre réserves de stockage 45 respectives pour verres, fer, papiers ou matières plastiques, par leur volets de vidanges situés à leurs bases, donnent accès sur l'unité de conditionnement comportant une trémie. Cette unité de conditionnement, accessible par l'ouverture d'accès directe et par le dessous des trémies de stockage, comporte une trémie d'évacuation, des éléments supportant et/ou formant le sac à remplir, un ensemble de soudage et de séparation des sacs.

Une trémie d'évacuation 93, de section carrée au sommet et d'embase circulaire adaptée au diamètre intérieur d'une cassette 21, supporte la gaine plastique 19, stockée plissée accordéon (ou soufflet). La pente de cette trémie 93 en forme d'entonnoir varie pour s'adapter à certaines fonctions. Une ouverture 94 sur la partie avant de cette trémie permet le passage direct dans un sac de récupération 27 (gaine plastique soudée à la base) des produits qui n'ont pas besoin d'être broyés, tels que déchets de légumes, viandes, etc. L'ouverture 94 à passage direct dans le sac de récupération est de forme rectangulaire avec un pan incliné et en retrait. Cet orifice 87 en forme d'un **V** possède un volet de fermeture 41, 129 articulé au sommet venant plaquer contre les parois internes de l'orifice 87, avec un certain angle par rapport à la verticale, permettant d'assurer une fermeture efficace de par sa seule masse. Un volet souple 40 vient compléter l'étanchéïté de l'ouverture et évite toutes émanations d'odeurs. Une bavette interchangeable pour protéger l'entrée est fixée sur les côtés par des crochets 128 et est livrée avec la cassette et la gaine stockée plissée accordéon. Ladite ouverture est située en partie basse du système, approximativement au tiers de la hauteur de l'ensemble du bloc, avec accès facile puisqu'elle est très utilisée, sans danger, par le consommateur.

L'ensemble trémie 93, 16, avec ses accessoires, est fixé par son sommet sur les quatre côtés du bloc 1 par des moyens appropriés. A sa base, elle complète l'étrier support 17 dans sa fonction support de cassette 21 par des moyens de fixation adéquats telles que vis. L'étrier support guide 17, fixé en 4 points à l'arrière du bloc 1 par vis ou autres moyens, possède deux jambes de force se resserrant en extrêmité pour supporter une gorge demi-circulaire, ceinturant la tête de la bobine cassette 21. Sur les fixations basses du support guide 17 de cassette est adjoint une jambe de force 18 qui se prolonge en son extrêmité en formant un rétreint 22 pour former un guide frein dévidoir de gaine en complicité avec la tête de bobine basse de cassettes 21 : un détrompeur position comportant deux brides différentes 21 permet de mettre la cassette dans le sens correct.

La bobine cassette 21 interchangeable (obtenue par moulage normalement), support de gaine thermoplastique ou autre produit vue de profil en coupe a la forme d'un rectangle où les deux longueurs à l'horizontale sont prolongées et s'apparentent à une bobine. Vue de dessus, elle se présente sous la forme d'un cylindre vertical évidé ou manchon, portion de tuyau à grand diamètre sur lequel est placée aux deux extrêmités une bride plate, dont le diamètre intérieur correspond au diamètre du tuyau où vont descendre et traverser les quatre produits stockés initialement dans les réserves 45 ainsi que les déchets, compactés sans broyage, issus de l'ouverture à accès direct en provenance de l'entrée 41. Les sections extérieures des brides hautes et basses sont cylindriques de préférence. Normalement, elles sont adaptées aux étriers 17 supports de bobine et à la jambe de force 18, assurant le guidage, la régulation d'avance descente et le débit de la gaine stockée en pliage plissé accordéon 19 sur la bobine cassette 21. Cette cassette interchangeable 21 est mise en place par l'ouverture de porte d'accès 39 équipée d'une gorge de maintien et de guidage venant verrouiller la bride supérieure de la bobine cassette en position travail. Les dimensions de cette bobine sont appropriées pour faciliter le passage des déchets d'une part, et d'autre part, pour stocker une recharge de gaine correspondant à environ un mois, ou plus, d'utilisation du sélectionneur compacteur. L'extrêmité basse de la gaine stockée 19 sur la bobine est soudée en usine à l'origine. Ainsi, tout passage de déchets à l'intérieur de la bobine cassette 21, de par son poids, provoque la descente de la partie basse de la gaine stockée 19 sur un plateau calibreur 31 situé en partie basse de l'ensemble bloc 1. Le rétreint 22 régule cette fonction descente, un capteur 19a détermine la fin de gaine stockée. Pendant ce transit ou transfert, ou phase descente de la gaine 27, déployée soudée à la base, celle-ci coulisse entre deux mâchoires montées en parallèle, placées perpendiculairement aux deux faces latérales du bloc 1. Ces mâchoires supportent les deux soudeuses coupeuses électriques de longueurs légèrement supérieures aux deux joues plaquées l'une contre l'autre de la gaine plastique cylindrique déployée sur une demi-circonférence, c'est-à-dire un diamètre multiplié par 3,14 et divisé par 2. Deux écrous supportent chacune d'elle. Le tout est entraîné par leurs supports. Les écrous bronze ou autre support d'une mâchoire se déplacent sur les filetages pas à gauche. Les deux autres de l'autre mâchoire se déplacent sur les filetages pas à droite 25. Ces deux vis pas à gauche et pas à droite 25 sont libres en rotation par des roulements ou paliers placés en leurs extrêmités et fixés à même le bloc 1 sur sa face avant et arrière. L' extrêmité d'arbre de chaque vis pas à droite, pas à gauche, est montée sur une poulie à courroie crantée par un système adapté, permettant le démontage. Selon une variante, ces mâchoires 70 sont mues par des vérins 150 (fig.9).

Chaque poulie crantée 23 de chaque vis est reliée par courroie crantée à une poulie d'entraînement crantée solidaire d'un moteur réducteur 24 à avance et réglage micrométrique de fin de course, de façon à réguler la pression des lames électriques soudeuses découpeuses, fixées en bordures longitudinales internes des mâchoires.

L'ensemble bloc moteur 24 de commande des mâchoires est maintenu à même le bloc 1, les systèmes de réglages micrométriques sont accessibles par la porte 39 et la porte 34.

D'autres moyens ou procédés pour soudure et coupage de gaine plastique 27 peuvent se substituer au précédent. Une molette électrique fixée sur un étrier se déplaçant en translation de gauche à droite. L'étrier fixé à même au parallélogramme articulé se déployant sous l'action d'un moteur réducteur de couple, est semblable au système de levage de vitre pour portière automobile. Les deux mâchoires soudeuses 70 peuvent également être entraînées face à face par des vérins 150 hydrauliques ou pneumatiques se substituant au moteur 24. Normalement le sac en assise sur le support 31, fait d'un plateau de métal, perforé de forme carrée, est à bords relevés. Il est supporté en ses quatre coins ou selon quatre emplacements judicieusement répartis. Ces quatre supports sont des ressorts 29 calibrés dynanométriquement. Chaque ressort est guidé par une tige cylindrique sur laquelle il est adapté. Les quatre tiges cylindriques sont solidaires du plateau 31. Les ressorts reposent à l'aplomb sur un autre plateau fixe équipé de quatre trous pour passage et guidage des quatre tiges guides de ressorts. Ce moyen permet aux sacs en appui sur le plateau mobile 31 de comprimer les ressorts en fonction de la charge. En fin de course, bas, le plateau 31 actionne le capteur 28 qui, lui-même, retransmet un voyant correspondant 126 que le sac est rempli à la charge voulue. A ce moment un utilisateur peut intervenir sur le bouton poussoir qui programme l'action avance des mâchoires soudeuses 70 et de leurs commandes. L'action de soudage et de découpage assurant la séparation de deux sacs successifs puis de retour à l'origine en position repos. On ouvre la porte 34, 64 par sa poignée 35 ou 64 et on retire le sac de produits mi-récupérables issus de l'entrée passage direct. A cet instant, si l'un des voyants lumineux 107 ou 108 ou 109 ou 110 est en service, celui-ci indique que l'une des quatre trémies goulottes de stockage 45 est pleine. Il est alors possible d'ouvrir la porte 42 par une poignée 43, pour actionner la poignée de vidange du produit remplissant la trémie réserve signalée par un voyant lumineux. Un système de sécurité interdit la vidange de plusieurs trémies simultanément ; en 23, position de la poulie crantée, l'ensemble soudage est au repos, en 30 au travail.

Le sac plein de déchets, reposant sur le plateau 31, peut être soudé et séparé de sa cassette support par action sur le poussoir repère 118, 119, 120, 122 du produit ensaché qui provoque le fonctionnement du moteur d'avance des coupeuses soudeuses 126.

Un bossage, appliqué à l'intérieur de la porte 34, assure le maintien vertical du sac pendant la phase chargement et même après soudure et séparation de celui qui succèdera. L'ensemble de soudage et de séparation des sacs par coupure comporte un moteur réducducteur 24 mâchoire 23, vis 25,38 et est à peu près situé au ¼ de la hauteur du bloc 1.

L'ensemble des commandes électriques, relais, etc., est consigné à l'intérieur d'une armoire mise en place à la base du bloc 1, fixé à même le fond. L'accès à la porte du coffret armoire électrique s'effectue par la porte 34 d'accès aux sacs à extraire, ou à

Chacune des portes d'accès 48, 42 et 34 est articulée à sa base sur un axe 47, 37, 30 et sont équipées de poignée pour ouverture. Un système de verrouillage mécanique et électromécanique interdit leur ouverture pendant la rotation de l'un ou l'autre moteur 2 ou 24. Elles peuvent également posséder leurs articulations et supports, soit en haut à gauche, soit à droite.

Pour répondre à certaines contraintes, on peut mettre à l'intérieur de l'entonnoir, trémie 16, un système d'aspiration pour papiers-cartons, plastiques et un peigne de quelques dents placé en extrêmité de butée simple 83 supporté par les volets 84 et l'axe 85. Ce peigne au repos plaque contre les cloisons de séparation 82 et, sous l'action d'appui des poignées de vidange 95, vient pousser et libérer les cartons-papiers, plastiques, broyés et laminés de la trémie de stockage 45, pour les accélérer au passage des volets 84, les conduisant par l'entonnoir trémie 16, au travers de la cassette 21, vers le sac de récupération 27.

Selon une variante, afin de diminuer davantage le niveau des bruits des systèmes en rotation opérant par granulométrie des produits triés, on peut substituer à tous les rotors dynamiques 8, 57, équipés de massellotes 79 et couteaux 9, les possibilités suivantes :
- les cloisons de séparations des goulottes 74, 75, 102 sont renforcées et liées entre elles par chacune des quatre entretoises 142 : deux au sommet, deux à la base, fixées aux angles et celles d'extrêmité à même le bloc châssis 1, figure 7.
- les courroies d'entraînement 76, le moteur 2, les rotors 8, 57, arbre axe 7, les systèmes 6, 10, 11, 46 et pratiquer au remplacement par les moyens technologiques représentés fig. 7, fig. 8.
- L'axe de l'arbre 7 hexagonal, défini précédemment, sert alors de référence pour la hauteur d'axe.
- Les vérins pousseurs 138 horizontaux, centrés selon l'axe fictif 145, sont ancrés sur les ex-cloisons 74, 75, 76, 102 renforcées par des matériaux en conformité. Les vérins pousseurs 138 supportent des mâchoires 139 épousant au sommet la forme intérieure ; vues de profil des goulottes d'alimentation 5 et 66, leurs bases sont rectangulaires. Les mâchoires 139 supportent des ergots ou becs 140 en saillie de forme triangulaire en dents de scies. La partie fixe sur laquelle vient plaquer la mâchoire mobile 139, après écrasement des produits, supporte en saillie des ergots 141, identiques à un ergot 140 mais, décalés dans le plan, pour s'imbriquer les uns dans les autres. Les têtes d'ergots 140, 141 ont pour mission de concasser, broyer, aplatir, les produits triés. Au niveau des mâchoires 140, 141 une butée d'arrêt descente des produits 143, placée perpendiculairement aux mâchoires, compromet le passage direct non comprimé des déchets vers la réserve 45. Toutefois, en fin de course de la mâchoire 139, les produits comprimés, aplatis, trouve à leur aplomb un orifice de passage rétréci, dégagé dans la palette mobile 143, autorisant au recul des vérins 138, de se libérer des ergots 141, dont les têtes ont arrondies pour descendre dans la réserve 45 correspondante.

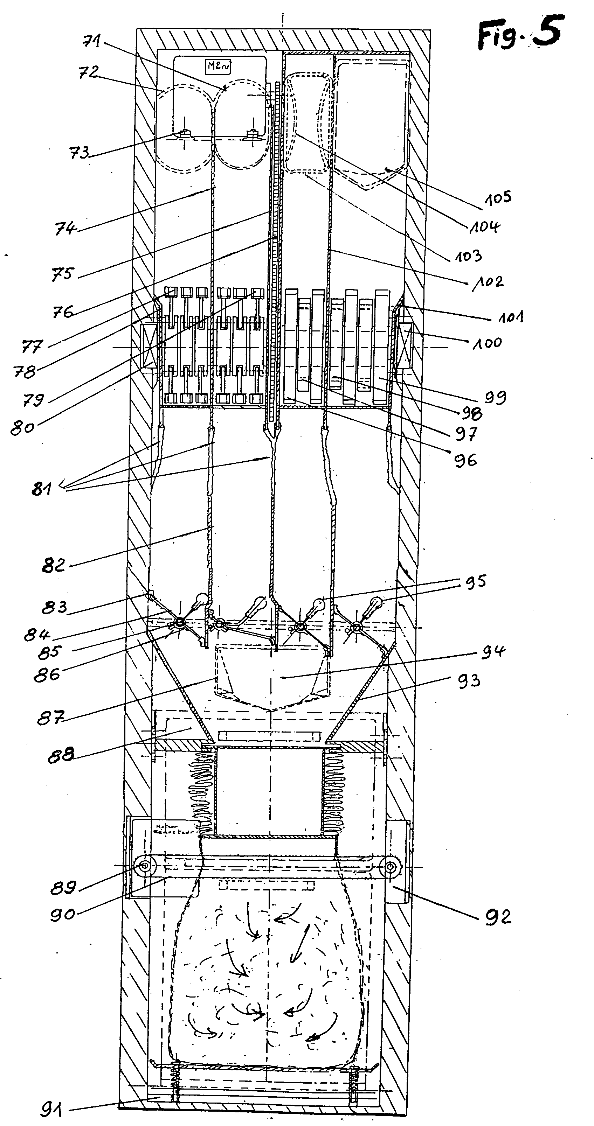

Compte tenu de la dimension des produits comprimés mais non granulés, il est évident que les volets de vidange 84 voient leur axe support 85 se déplacer le plus près possible d'un bord, afin d'augmenter la dimension de sortie de la réserve 45 tel était le cas pour l'évacuation des tôles aplaties (fig. 5) selon le premier exemple de réalisation. On peut toujours rendre plus efficace les procédés de concassage (verres), broyage (papiers-cartons, matières plastiques) et comprimer au maximum (tôles en acier) et on peut encore aménager les couteaux (en forme de lames de scie ou autres profils), par des moyens supplémentaires mieux adaptés 146 constitués de dents en forme de ciseaux.
- Pour le verre, les ergots 140, 141 sont de longueurs différentes et complémentaires, un ergot court 141 s'imbriquant avec un ergot long 140 : ainsi les efforts de poussées origines sur les verres ont des impacts plus efficaces face aux premières résistances à la compression, avant cassure.
- Pour tôles d'acier, les ergots ou becs 140, 141 ont leurs sommets tronqués et arrondis s'imbriquant par un rayon de courbure 149 approprié pour aplatir en ondulation, facilitant ainsi la descente vers l'évacuation 144.
- Pour papiers-cartons, matières plastiques, les ergots 140, 141 en forme de lames de scie affûtées 146, imbriquées et décalées tangentes apportent plus d'aisance aux découpes et aux évacuations. Il est évident que tous ces moyens 140, 141 adaptés pour chaque matière, peuvent être montés amovibles sur les mâchoires 139 pour interchangeabilité. Ceci laisse toute liberté pour définir a priori les formes des têtes de travail 141, 140 à adapter avec chaque nature de matériau à compacter. Les principes fondamentaux définissant les fonctions restent inchangés. Les mâchoires supports 139, avec leurs quatre tiges supports, forment corps articulés sur les ensembles vérins 138, entraînés par force hydraulique, pneumatique, électromagnétique.

De même, la butée palette d'arrêt 143 ayant à son extrêmité le passage 144, pour descente vers évacuations de produits comprimés ou concassés ou granulés, se monte articulée sur l'axe 148 et basculante vers l'avant bas, entraînée dans cette course par la masselotte 147, faisant office de contrepoids.

La palette d'arrêt 143 se libère par l'avance des mâchoires 139 assurant compression et maintien des produits et bascule à l'avant entraînée par la masselotte 147, augmentant considérablement la sortie d'évacuation 144. Au recul ou retour à la position repos des mâchoires 139, la base de la mâchoire 139 vient faire appui sur l'arrière de la palette d'arrêt 143, la faisant relever vers l'horizontale pour assurer sa fonction blocage et arrêt des produits avant qu'ils soient comprimés, découpés. Cette butée palette basculante 143 peut avoir une partie plane horizontale au repos depuis l'axe 148, à la position appui en butée sur la base de la mâchoire 139. La partie avant vers la sortie 144 s'incline vers le bas, la masselotte 147 est placée très près de la sortie 144 et placée également au-dessous de la palette 143. Elle fait office de contrepoids. La position de l'axe 148 dans le plan horizontal se définit en fonction des contraintes imposées par l'évacuation des produits, donc mobile.

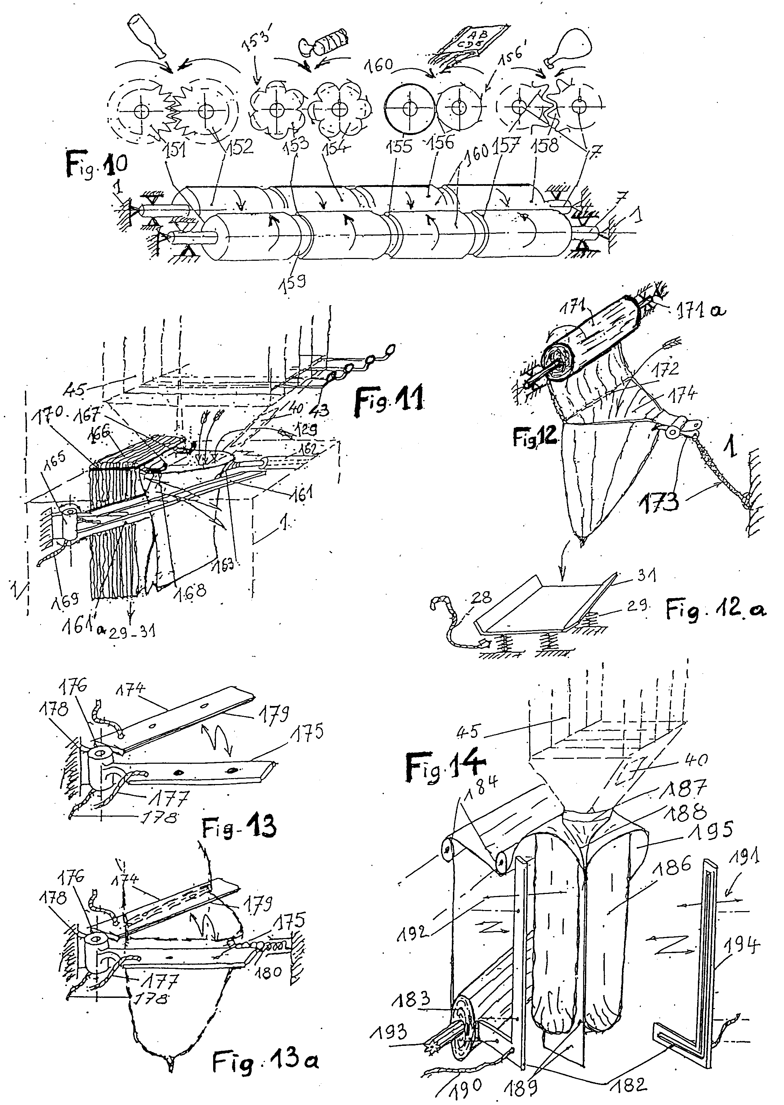

Selon une autre variante un troisème système de rotor dont les moyens sont de laminer, découper, comprimer, figure 10 consiste en une paire de cylindres 160 entraînés en rotation en sens inverse vers l'intérieur. Chaque cylindre se décompose en 4 systèmes équipés en surface par des moyens appropriés 151, 152 aux matériaux à réduire en volume pour verres les deux cylindres 151, 152 sont équipés de dents décalées s'imbriquant les unes entre les autres avec jeu nécessaire pour obtenir la granulométrie du verre recherchée, évitant les blessures aux personnes ou l'endommagement des sacs de stockage 27.
- Pour boîtes tôles ce sont des parties de cylindres 153, 154 décalées, s'imbriquant en rotation avec jeu nécessaire permettant laminage et cintrage des boîtes, chaque tête cylindrique possède une dent d'entraînement orientée dans le sens de rotation 153a.
- Pour papiers-cartons un cylindre 155, traité spécialement en surface reçoit en appui les couteaux de découpes 156a de l'autre cylindre 156.
- Pour matières plastiques les surfaces de cylindres 157, 158 sont équipées de dents décalées affûtées aux sommets, s'imbriquant les unes dans les autres, facilitant compression, prédécoupes de toutes matières plastiques.

Ces trois systèmes différents, deux rotatifs, un par translation, permettent de compacter, découper, sélectionner verres, fer, papiers-cartons, matières plastiques. Tous peuvent se substituer entre eux et se replacer pour s'intégrer avec les systèmes amont 4, 66 goulottes d'approvisionnement et les systèmes de stockage aval 45. On pourra donc assurer les fonctions réductions-découpes-compactages-laminages-sélections, soit par les systèmes des fig. 6, 6a, 6b, 6c, 6d, 6e, ou les systèmes des figures 7, 8, ou les systèmes de la figure 10.

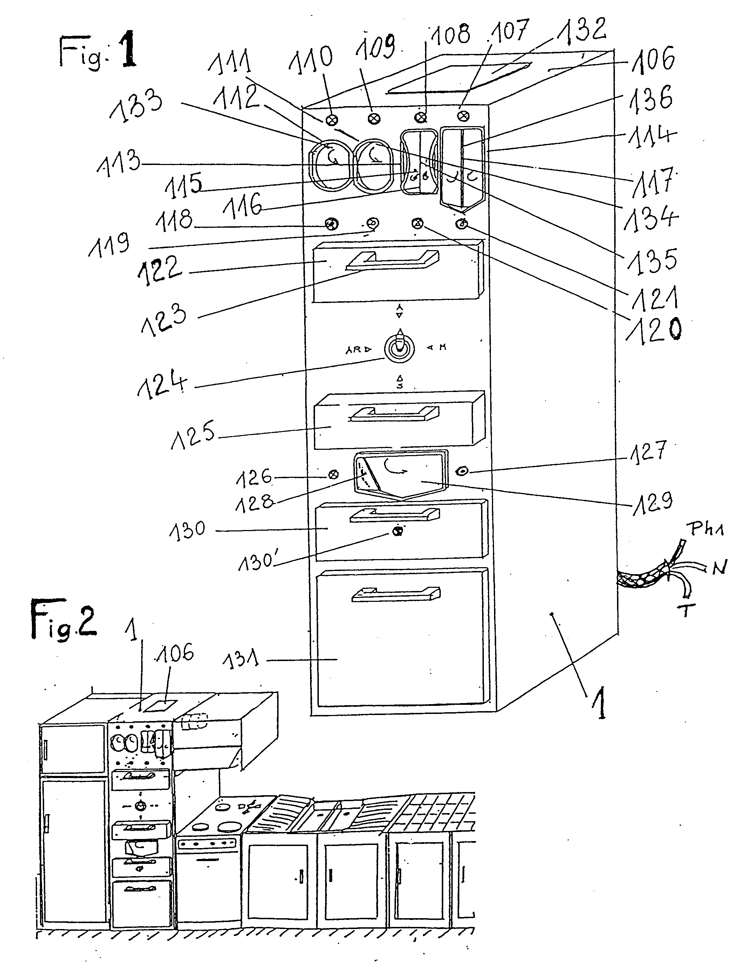

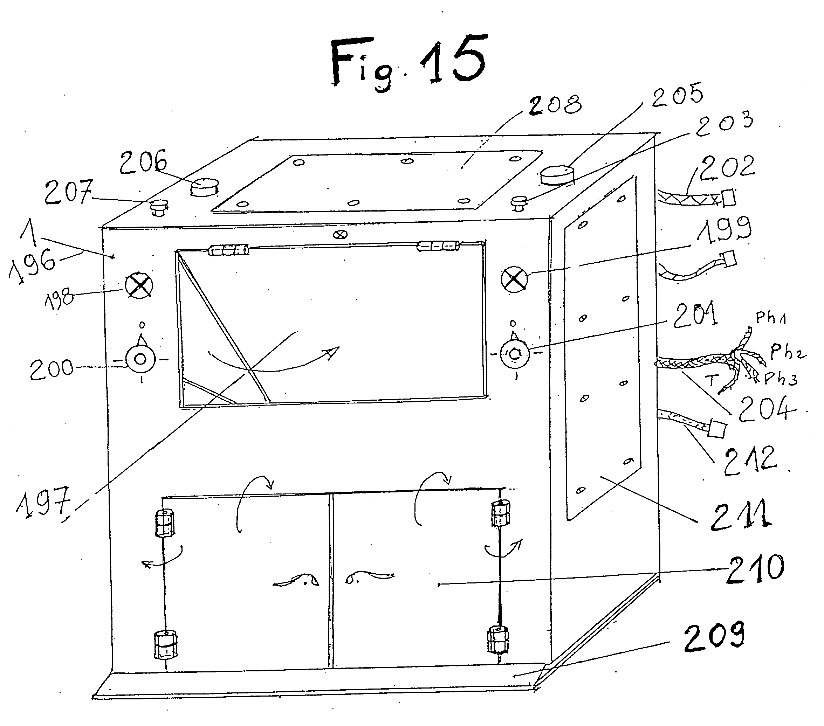

Il est évident que le bloc Sélecteur-Compacteur automatique de déchets figure 1, ramené à l'échelle des produits de récupérations issus de l'Industrie ou Autres Grandes Sociétés, peut être plus sélectif, conçu pour mono-produit : ex. récupération du verre uniquement, ou bien des emballages carton ou bois des fruits et légumes, etc (fig. 15).

Dans le cas de cet emploi, on utilise l'un des systèmes de compactage précités le mieux adapté recevant le produit unique à réduire en volume, une seule entrée 137 sur la face avant suffit, la trémie de stockage 45 devient inutile, l'évacuation s'effectuant directement dans l'un des dispositifs de récupération précédemment décrit.

Ces systèmes industriels sont équipés de gaines de ventilation 205, de système hydrateur 202, buse pour eau pulvérisée, de systèmes de séchage 203 ou de déshydratation appropriés.

Le volet d'entrée 197 des matières, articulé au sommet, possède l'inertie pour se fermer automatiquement par rabat. Il est adapté aux dimensions des emballages les plus volumineux, ex. cagettes en bois, cartons d'emballages. Au retrait de ceux-ci, comprimés ou granulés par les deux volets 210 propres aux conditions d'évacuations, se substitue aux deux volets un seul volet souple, coulissant latéralement, ou vers le haut, et s'enroulant automatiquement à l'approche d'un tracto-chargeur dont les bras supports viennent en appui sur l'embase 209 pentue extérieurement. Des volets amovibles 208, 211, 206, 207 servent à l'entretien et aux branchements divers. 204 est le raccordement électrique, 212 le branchement hydraulique ou pneumatique, 198, 199 les voyants lumineux des signalisations, 200 et 201 sont des programmateurs de commandes électriques et de sécurité, voyants de mise sous tension.

Selon une variante à la cassette 21, support de gaine plastique pliage accordéon 19, support de gaine plastique pliage accordéon 19, se substitue directement une liasse de sacs 166, empilés, placés verticalement, figure 11, maintenus entre eux au sommet par un élastique 170. Chaque sac est perforé au sommet de deux trous cylindriques prolongés par quatre découpes détrompeuses en croix. La liasse de sacs empilés 166 est supportée par deux tiges 168 recourbées en extrêmité et de sections adaptées (triangulaires ...), affûtées au sommet, afin de provoquer la rupture des trous sous l'action de la charge prédéterminée pour manutention aisée du sac récupérateur.

Le 1er sac est mis en place pour remplissage par un système à ventouse d'aspiration 163 dont la tige support coulisse dans un cylindre de vérins double effets 162. Les capteurs, annonçant la fin de charge du sac des produits issus soit des trémies de stockage 45 ou du passage direct 129, commandent l'action de relevage de la plaque d'appui du bras de soudure 161', puis l'action de translation et de pivotement autour de 165 par servo-moteur du bras de soudure 161 cette dernière fonction accomplie, retour à l'initial, dégagement du sac plein par porte 34 et mise en place d'un nouveau sac par la ventouse 163 et 162.

Selon une autre variante au système cassette 21, gaine 19, puis au système liasse de sacs 166, 167, 170, se substitue un système figure 12, comportant un rouleau de gaine dont les sacs sont inscrits par prédécoupe sur la demi-partie arrière et une découpe continue 172 sur la demi-partie avant, le rouleau est axé sur un système d'axe détrompeur 171a à cannelure étoile irrégulière. Un système ralentisseur frein peut être monté sur l'arbre support 171a. Une pince et son attache de liaison élastique 173 fixée sur le bloc 1 permet le maintien ouvert du sac pour remplissage en 174. Dans l'action de la charge, le sac descend sur le plateau 31 calibré par les ressorts 29. La charge désirée obtenue, le capteur 28 actionne les systèmes de mâchoires soudeuses figure 13, agissant tel un ciseau ou Vé se refermant sur le sommet du sac plein de déchets à récupérer. L'extraction du sac plein se fait par la porte 34, mise en place de la pince 173 sur le sommet du nouveau sac s'étant présenté, issu du rouleau de stockage 171.

Selon une autre variante le système de conditionnement figure 14, utilise directement un film enroulé de matière plastique 183 sur un axe 193 avec détrompeur à système étoilé dissymétrique, distribuant sur deux rouleaux de renvoi 184, placés en équerre par rapport au rouleau 183 habillant par retournement et enveloppement 188 une goulotte 187, constituant l'embase des trémies de stockage 45 et de l'ouverture 40 ; le sac est fermé par fermeture latérale et à la base 189 du sac 186 par soudure sous l'action des deux mâchoires soudeuses en L 194 à branche horizontale 182 et verticale 191 et soudeuse coupeuse à la base par la branche horizontale 182, se rapprochant en translation une alimentation électrique 190 permet le chauffage des bras soudeurs 194.

Selon une autre variante, un sac individuel est mis en place manuellement sur les deux supports 167 figure 11, après retrait du sac plein par la porte 34. Le système de soudage figure 9, consistant en deux mâchoires parallèles 70, 23 mues par vérins double effets, peut s'adapter sur tous types de conditionnements.

Il est clair que chacun de ces modes de conditionnement décrit précédemment peuvent s'adapter au choix sur chacun des types de broyage compactage.

Les types de broyage et compactage peuvent s'imbriquer au choix avec complémentarité au sein des cinq systèmes avals de conditionnement.

Selon une variante, l'arbre cylindrique avec cannelures pour clavetages décalés aux angles désirés est taillées longitudinalement sur sa périphérie.

En variante, les dispositifs de soudages des sacs équipés de deux lames parallèles se déplaçant en translation, ou bien les dispositifs travaillant en Vé, ou ciseaux, de la figure 13, peuvent s'adapter au choix sur tous les systèmes d'emballages utilisés.

## Revendications

**1 -** Sélecteur-Compacteur pour le tri, le broyage et le conditionnement des déchets, caractérisé en ce qu'il comporte au moins deux unités principales constituées chacune d'une unité spécifique d'entrée, d'une unité spécifique de broyage, d'une unité spécifique de stockage et d'une unité de conditionnement, les déchets introduits dans l'unité d'entrée étant broyés dans l'unité de broyage puis stockés temporairement dans l'unité de stockage avant d'être déversés dans l'unité de conditionnement.

**2 -** Le Sélecteur-Compacteur selon la revendication 1, caractérisé en ce qu'il comporte une ouverture d'accès direct permettant de déverser des déchets dans l'unité de conditionnement sans passer par l'unité de traitement ou par l'unité de stockage.

**3 -** Le Sélecteur-Compacteur selon l'une des revendications 1 ou 2, caractérisé en ce que chaque unité spécifique d'entrée comporte une ouverture calibrée permettant le passage aux déchets d'une certaine matière et en interdisant le passage à ceux d'une autre matière, ou bien, caractérisé en ce que l'ouverture 71 - 134 d'accès aux tôles comprend deux joues parallèles sur lesquelles sont placées à la base et au sommet de deux demi-cercles, le tout formant une ovoïde régulière, ou bien, caractérisé en ce que l'ouverture calibrée 72 - 133 d'accès pour le verre comporte deux joues parallèles avec demi-cercle à la base et au sommet, ou bien, caractérisé en ce que l'ouverture calibrée 103 - 115 pour papiers-cartons est parallélépipédique avec un grand axe vertical pour boîtes cartons ou journaux et possède à l'entrée un rétrécisement 104 en son centre par deux parties de cercles en opposition, ou bien, caractérisé en ce que l'ouverture calibrée 105 - 114 pour emballage plastique est parallélépipédique avec sa base incurvée en V pour faciliter l'accès et le guidage des bouteilles plastiques.

**4 -** Le Sélecteur-Compacteur selon l'une des revendications précédentes, caractérisé en ce que chaque ouverture calibrée débouche sur une trémie goulotte, un rotor de broyage et une grille, la trémie goulotte canalisant les déchets à broyer sur le rotor et la grille laissant échapper les déchets suffisamment réduits en volume.

**5 -** Le Sélecteur-Compacteur selon la revendication 4, caractérisé en ce que la trémie goulotte est délimitée par une surface à profil, en forme de corne s'évasant après les orifices d'entrée pour apporter aisance aux produits à acheminer sur les rotors de broyage.

**6 -** Le Sélecteur-Compacteur selon l'une des revendications 4 ou 5, caractérisé en ce que les rotors pour les déchets de verre ou de tôles comportent des étriers supportant des têtes de masselottes pivotables.

**7 -** Le Sélecteur-Compacteur selon l'une des revendications 4 ou 5, caractérisé en ce que les rotors pour les déchets de papiers-cartons ou de matières plastiques sont constitués par un ensemble de scies fraises circulaires placé en parallèle séparées l'une de l'autre par un manchon supportant au moins un volet faisant office de ventilateur.

**8 -** Le Sélecteur-Compacteur selon l'une des revendications précédentes, caractérisé en ce que les unités de stockage comportent des trémies réserve de stockage 45 séparées l'une de l'autre par des cloisons 81, des moyens de contrôle de leur niveau de remplissage et des moyens de vidanges 85 - 95 des déchets broyés vers l'unité de conditionnement, par des systèmes de volets mobiles 83 - 84.

**9 -** Le Sélecteur-Compacteur selon l'une des revendications précédentes, caractérisé en ce que l' unité de conditionnement est accessible par l'ouverture d'accès directe et par le dessous des trémies de stockage et en ce qu'elle comporte une trémie d'évacuation, des éléments supportant et/ou formant le sac à remplir, un ensemble de soudage et de séparation des sacs.

**10 -** Le Sélecteur-Compacteur selon la revendication 9, caractérisé en ce que l'élément formant les sacs possède une réserve de stockage de gaine plissée accordéon 21 ou autre système 170 - 171 - 184 - 186, emmagasinée par l'ouverture 130, un système de soudage 23 - 24 - 25 - 35.

**11 -** Le Sélecteur-Compacteur selon les revendications 7 - 9 - 10, caractérisé en ce que les éléments de broyage et compactage sont des systèmes mus par vérins 138, figures 7 - 8, lesquels entraînent les cloisons mobiles de compression 139 vers l'avant qui, en fin de course compression libèrent la palette 143, articulée sur l'axe 148 et entraînée par le contrepoids 147. Le basculement vers l'avant de la palette 143 permet le passage des déchets comprimés dans la réserve de stockage. Le recul de la cloison 139 vers son point de repos initial fait que sa base, appuyant sur l'arrière de la palette 143, referme les orifices de sortie des déchets 144. Des systèmes de rouleaux broyeurs découpeurs inversés, figure 10 peuvent se substituer au système précédent.

**12 -** Le Sélecteur-Compacteur selon les revendications 7 - 8 - 9 - 10, caractérisé en ce que les éléments formant et soudant les sacs sont ceux des figures 11 - 12, ou bien, système à fermeture en V, figure 13, ou bien, système à col monté rabattu, figure 14, soudure en L.

**13 -** Le Sélecteur-Compacteur selon les revendications 10 - 11 - 12 , caractérisé en ce que les éléments des systèmes sacs calibrés 32 de récupération et de stockage des déchets sont tarés automatiquement par capteurs 28 - 29 et accessibles pour retrait par ouverture basse 34. Tous les éléments de programmation synchrone des organes moteurs, des systèmes de sécurité et des systèmes témoins sont régis par armoire-bloc 26 accessible lorsque l'ensemble bloc 1 est au repos.
